(19) Europäisches Patentamt / European Patent Office / Office européen des brevets

(11) **EP 4 582 250 A1**

(12) **EUROPEAN PATENT APPLICATION**
published in accordance with Art. 153(4) EPC

(43) Date of publication:
**09.07.2025 Bulletin 2025/28**

(21) Application number: **23862733.5**

(22) Date of filing: **06.06.2023**

(51) International Patent Classification (IPC):
**B32B 15/09** (2006.01)　　**B32B 27/36** (2006.01)
**B65D 25/36** (2006.01)　　**B65D 65/40** (2006.01)
**B65D 65/42** (2006.01)

(52) Cooperative Patent Classification (CPC):
**B32B 15/09; B32B 27/36; B65D 25/36;
B65D 65/40; B65D 65/42**

(86) International application number:
**PCT/JP2023/021046**

(87) International publication number:
**WO 2024/053188 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.09.2022 JP 2022141773**

(71) Applicant: JFE Steel Corporation
Tokyo 100-0011 (JP)

(72) Inventors:
• **UJIHIRA Tomoyuki**
  Tokyo 100-0011 (JP)
• **FUJIMOTO Soichi**
  Tokyo 100-0011 (JP)
• **YAMANAKA Yoichiro**
  Tokyo 100-0011 (JP)

(74) Representative: **Haseltine Lake Kempner LLP
One Portwall Square
Portwall Lane
Bristol BS1 6BH (GB)**

(54) **RESIN-COATED METAL SHEET**

(57)　Provided is a resin-coated metal sheet that achieves both the slidability and scraping resistance of the resin coating layer and the ink adhesion. A resin-coated metal sheet 1 comprises: a metal sheet 2; and a resin coating layer 3 containing 75 mass% or more of polyester resin relative to total resin, wherein the resin coating layer 3 has at least a three-layer structure including an outermost layer 3a, an intermediate layer 3b, and an undermost layer 3c, a melting point of the resin coating layer 3 is 230 °C or higher and 254 °C or lower, the outermost layer 3a contains a polyolefin, a melting point of the polyolefin is 80 °C or higher and 140 °C or lower, and a dispersed particle size of the polyolefin measured by Raman spectroscopy is 0.018 $\mu$m or more and 5.0 $\mu$m or less.

*FIG. 1*

EP 4 582 250 A1

**Description**

TECHNICAL FIELD

The present disclosure relates to a resin-coated metal sheet.

BACKGROUND

Laminated steel sheets are developed in which the surface of a metal sheet, such as tin-free steel (TFS) or aluminum, used as material for metal containers is coated with a thermoplastic resin film. Laminated steel sheets are widely used in the fields of beverage cans and food cans which require strict forming.

In recent years, materials used for metal containers, particularly metal sheets and resin coating layers, are being made thinner by tightening the processing conditions from the viewpoint of resource saving and material cost reduction. This increases the amount of deformation during can body production, and particularly raises the possibility that the resin coating layer located on the outside of the container after forming is fractured or scraped. In light of this, there is a demand for material design that suppresses fracturing or scraping of the resin coating layer during can body production. As a technique of suppressing fracturing or scraping of the resin coating layer, WO 2019/116706 A1 (PTL 1) and WO 2019/116707 A1 (PTL 2) propose a method that adds a lubricating component to the resin coating layer to enhance the slidability and scraping resistance of the resin coating layer.

The resin coating layer located on the outside of the container after forming is printed to improve design. If the affinity between the resin coating layer and various inks used for printing is low, sufficient ink adhesion cannot be ensured. As a result, the printing ink may peel off during can body processing, impairing the design and quality of the appearance of the can body.

CITATION LIST

Patent Literature

PTL 1: WO 2019/116706 A1
PTL 2: WO 2019/116707 A1

SUMMARY

(Technical Problem)

The lubricating component added to the resin coating layer suppresses fracturing or scraping of the resin coating layer. However, the lubricating component may impair the affinity between the surface of the resin coating layer and the printing ink applied by printing treatment. This is likely to cause the ink to peel off during processing. There is thus a need for a resin-coated metal sheet that achieves both the slidability and scraping resistance of the resin coating layer and the adhesion of the printing ink at a higher level.

It could therefore be helpful to provide a resin-coated metal sheet that achieves both the slidability and scraping resistance of the resin coating layer and the ink adhesion.

(Solution to Problem)

We conducted careful examination to achieve the stated object. Conventionally, only the dispersed particle size of the lubricating component present locally on the outermost surface of the resin coating layer has been taken into consideration. We discovered the dispersed particle size range of the lubricating component that achieves both the slidability and scraping resistance of the resin coating layer and the ink adhesion by taking into consideration the dispersed particle size of the lubricating component three-dimensionally in a wider range including the dispersed particle size of the lubricating component present inside the resin coating layer in the thickness direction.

The present disclosure is based on these discoveries. We thus provide the following.

[1] A resin-coated metal sheet comprising: a metal sheet; and a resin coating layer containing 75 mass% or more of polyester resin relative to total resin, on at least one side of the metal sheet, wherein the resin coating layer has at least a three-layer structure including an outermost layer, an intermediate layer, and an undermost layer, a melting point of the resin coating layer is 230 °C or higher and 254 °C or lower, the outermost layer contains a polyolefin, a melting point of the polyolefin is 80 °C or higher and 140 °C or lower, and a dispersed particle size of the polyolefin on an outermost surface and inside in a thickness direction of the resin coating layer measured by Raman spectroscopy is 0.018 μm or more and 5.0 μm or less.

[2] The resin-coated metal sheet according to [1], wherein the outermost layer contains 0.10 mass% or more and 1.0 mass% or less of the polyolefin.

[3] The resin-coated metal sheet according to [1] or [2], wherein a weight-average molecular weight of the polyolefin is 2500 or more and 80000 or less.

[4] The resin-coated metal sheet according to any one of [1] to [3], wherein the polyolefin is at least one of an acid-modified polyolefin and an oxidized polyolefin.

[5] The resin-coated metal sheet according to any one of [1] to [4], wherein an acid value of the polyolefin is 1.0 mgKOH/g or more and 80 mgKOH/g or less.

[6] The resin-coated metal sheet according to any one of [1] to [5], wherein the intermediate layer contains 10 mass% or more and 30 mass% or less of inorganic particles.

[7] The resin-coated metal sheet according to any one of [1] to [6], wherein a thickness of each of the outermost layer and the undermost layer is 1.0 μm or more and 5.0 μm or less, and a thickness of the intermediate layer is 6.0 μm or more and 30 μm or less.

[8] A metal container produced using the resin-coated metal sheet according to any one of [1] to [7], wherein the resin coating layer is located on an outside of the metal container.

(Advantageous Effect)

It is thus possible to provide a resin-coated metal sheet that achieves both the slidability and scraping resistance of the resin coating layer and the ink adhesion.

BRIEF DESCRIPTION OF THE DRAWINGS

In the accompanying drawings:

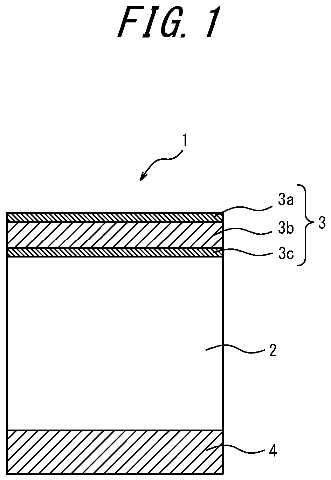

FIG. 1 is a schematic view illustrating a cross section of a resin-coated metal sheet.

DETAILED DESCRIPTION

An embodiment of the present disclosure will be described below. The present disclosure is not limited to the embodiment described below.

FIG. 1 is a cross-sectional view illustrating the structure of a resin-coated metal sheet according to an embodiment of the present disclosure. As illustrated in FIG. 1, a resin-coated metal sheet 1 includes a metal sheet 2, a resin coating layer 3 formed on the front side of the metal sheet 2, and a resin coating layer 4 formed on the back side of the metal sheet 2. The resin coating layer 3 or 4 may be provided only on one side of the metal sheet 2. The resin coating layers 3 and 4 are located on the outside and inside of a container after forming, respectively. As illustrated in FIG. 1, the resin coating layer 3 has at least a three-layer structure consisting of an outermost layer 3a, an intermediate layer 3b, and an undermost layer 3c. The resin coating layer 4 may equally have a three-layer structure.

[Metal sheet]

The metal sheet is preferably a steel sheet. The metal sheet is preferably tinplate or tin-free steel (TFS). As the tinplate, it is preferable to use tinplate with a coating weight per side in the range of 0.5 g/m² or more and 15 g/m² or less. The TFS preferably has, on its surface, a metal chromium layer with a coating weight per side of 50 mg/m² or more and 200 mg/m² or less, and on the metal chromium layer, a chromium oxide layer with a coating weight per side of 3 mg/m² or more and 30 mg/m² or less in terms of metal chromium. The type of the metal sheet is not limited as long as the metal sheet can be formed into the desired shape, but metal sheets of the following compositions and production methods are preferable.

(1) A metal sheet obtained by subjecting low carbon steel with a C (carbon) content in the range of 0.010 mass% or more and 0.10 mass% or less to recrystallization annealing by continuous annealing.
(2) A metal sheet obtained by subjecting low carbon steel with a C content in the range of 0.010 mass% or more and 0.10 mass% or less to recrystallization annealing and overaging treatment by continuous annealing.
(3) A metal sheet obtained by subjecting low carbon steel with a C content in the range of 0.010 mass% or more and 0.10 mass% or less to recrystallization annealing by box annealing.
(4) A metal sheet obtained by subjecting low carbon steel with a C content in the range of 0.010 mass% or more and 0.10 mass% or less to recrystallization annealing by continuous annealing or box annealing and then to secondary cold rolling (double reduced rolling).

(5) A metal sheet obtained by subjecting interstitial free (IF) steel made by adding elements that fix solute C, such as Nb and Ti, to ultra low carbon steel with a C content of 0.003 mass% or less, to recrystallization annealing by continuous annealing.

The mechanical properties of the steel sheet are not limited as long as the steel sheet can be formed into the desired shape. In order to achieve more favorable processability and also maintain the can body strength more favorably, the yield point (YP) of the steel sheet is preferably 220 MPa or more and preferably 580 MPa or less. Moreover, the Lankford value (r-value), which is an index of plastic anisotropy, of the steel sheet is preferably 0.8 or more. Furthermore, the absolute value of the in-plane anisotropy $\Delta r$ of the r-value of the steel sheet is preferably 0.7 or less.

The components of steel for satisfying the foregoing mechanical properties are not limited. For example, components such as Si, Mn, P, S, Al, and N are contained. The Si content is preferably 0.001 mass% or more. The Si content is preferably 0.1 mass% or less. The Mn content is preferably 0.01 mass% or more. The Mn content is preferably 0.6 mass% or less. The P content is preferably 0.002 mass% or more. The P content is preferably 0.05 mass% or less. The S content is preferably 0.002 mass% or more. The S content is preferably 0.05 mass% or less. The Al content is preferably 0.005 mass% or more. The Al content is preferably 0.100 mass% or less. The N content is preferably 0.0005 mass% or more. The N content is preferably 0.020 mass% or less. The steel sheet may contain other components such as Ti, Nb, B, Cu, Ni, Cr, Mo, and V, but the total content of these elements is preferably 0.02 mass% or less from the viewpoint of ensuring corrosion resistance, etc.

The thickness of the metal sheet is not limited, and, for example, may be 0.20 mm or more and may be 0.25 mm or less.

[Resin coating layer]

The resin coating layer 3 contains 75 mass% or more of polyester resin relative to the total resin in terms of solid content. Herein, the content of the polyester resin refers to the proportion of the polyester resin in the resin minus the weights of additives such as polyolefin and inorganic particles contained in the resin coating layer. The content of the polyester resin in the resin coating layer 3 is preferably 80 mass% or more and preferably 100 mass% or less relative to the total resin.

The polyester resin is a polymer consisting of a dicarboxylic acid unit and a glycol unit.

Examples of dicarboxylic acid units that can be used include units derived from aromatic dicarboxylic acids such as terephthalic acid, isophthalic acid, naphthalenedicarboxylic acid, diphenyldicarboxylic acid, diphenylsulfonedicarboxylic acid, diphenoxyethanedicarboxylic acid, 5-sodiumsulfoisophthalic acid, and phthalic acid; aliphatic dicarboxylic acids such as oxalic acid, succinic acid, adipic acid, sebacic acid, dimer acid, maleic acid, and fumaric acid; alicyclic dicarboxylic acids such as cyclohexanedicarboxylic acid; and oxycarboxylic acids such as p-oxybenzoic acid.

Examples of glycol units that can be used include units derived from aliphatic glycols such as ethylene glycol, propanediol, butanediol, pentanediol, hexanediol, and neopentyl glycol; alicyclic glycols such as cyclohexanedimethanol; aromatic glycols such as bisphenol A and bisphenol S; and diethylene glycol.

Two or more of the foregoing dicarboxylic acids may be used in combination and two or more of the foregoing glycols may be used in combination in a range that does not impair heat resistance and processability.

The melting point of the resin coating layer 3 is 230 °C or higher and 254 °C or lower. If the melting point of the resin coating layer 3 is 230 °C or higher, the resin can be favorably prevented from softening during forming, and fracturing or scraping can be prevented more favorably. If the melting point of the resin coating layer 3 is 254 °C or lower, the crystallinity of the polyester resin contained in the resin coating layer 3 is in a more favorable range, and fracturing or scraping of the resin coating layer 3 during forming can be prevented more favorably. The melting point of the resin coating layer 3 is preferably 234 °C or higher and more preferably 238 °C or higher. The melting point of the resin coating layer 3 is preferably 252 °C or lower and more preferably 250 °C or lower. The melting point of the resin coating layer 3 is measured according to the following method. The resin coating layer 3 is measured using a differential scanning calorimeter, and the peak top temperature of the endothermic peak in the range of 200 °C to 280 °C in the obtained heat flow is taken to be the melting point.

The outermost layer 3a in the resin coating layer 3 contains a polyolefin as a lubricating component. As a result of the outermost layer 3a containing a polyolefin as a lubricating component, excellent slidability and scraping resistance can be ensured, and fracturing or scraping of the resin coating layer 3 can be suppressed even in can body forming under severe processing conditions. As the lubricating component, a polyolefin that has excellent film formation property and dispersibility and has a melting point within an appropriate range is used. It is preferable to use a polyolefin having a polar group in order to ensure sufficient affinity with the polyester resin which is the main component of the resin coating layer 3. Examples of the polyolefin having a polar group include acid-modified polyolefins such as ethylene-maleic anhydride copolymers, oxidized polyolefins such as oxidized polyethylene, and ethylene-acrylic acid copolymers. A plurality of types of polyolefins may be used in combination.

The polyolefin is preferably at least one of an acid-modified polyolefin and an oxidized polyolefin. As a result of the polyolefin being at least one of an acid-modified polyolefin and an oxidized polyolefin, the acid value is sufficiently high and the affinity between the outermost layer 3a and the printing ink is improved. The polyolefin may be a mixture of an acid-modified polyolefin and an oxidized polyolefin.

The melting point of the polyolefin is 80 °C or higher and 140 °C or lower. If the melting point of the polyolefin is lower than 80 °C, the polyolefin tends to concentrate on the surface of the resin coating layer 3 due to heat treatment performed during the process of coating the metal sheet with the resin coating layer 3 and during the forming process of the resin-coated metal sheet. The polyolefin concentrated on the surface impairs the adhesion of the printing ink, as a result of which the printing ink may peel off during forming. If the melting point of the polyolefin is higher than 140 °C, sufficient slidability and scraping resistance cannot be ensured and the resin coating layer 3 may be fractured or scraped during forming. The melting point of the polyolefin is preferably 90 °C or higher and more preferably 100 °C or higher. The melting point of the polyolefin is preferably 130 °C or lower and more preferably 120 °C or lower. The melting point of the polyolefin is measured according to the method described in the EXAMPLES section below.

The dispersed particle size of the polyolefin on the outermost surface and inside in the thickness direction of the resin coating layer 3 is 0.018 $\mu$m or more and 5.0 $\mu$m or less. The dispersed particle size of the polyolefin is measured by peak intensity ratio analysis of Raman spectrum obtained by Raman spectroscopy using a confocal Raman spectrometer. With this measurement method, the dispersion state of the polyolefin in the resin coating layer 3 can be calculated nondestructively and three-dimensionally with high resolution, and the dispersed particle size of the polyolefin that cannot be captured by other analytical methods can be captured. If the dispersed particle size of the polyolefin present on the outermost surface and inside in the thickness direction of the resin coating layer 3 is less than 0.018 $\mu$m, the dispersed particle size is extremely small, so that sufficient slidability and scraping resistance cannot be ensured and fracturing or scraping may occur during forming. If the dispersed particle size of the lubricating component present on the outermost surface and inside in the thickness direction of the resin coating layer 3 is more than 5.0 $\mu$m, there is a possibility that fracturing or scraping occurs with excessively large dispersed particles of the polyolefin as the initiation point during forming. In addition, due to the influence of a plurality of heat treatments performed during forming, the proportion of the polyolefin concentrated and exposed on the surface of the resin coating layer 3 increases. This is likely to hinder the adhesion of the printing ink and cause the printing ink to peel off during forming. The dispersed particle size of the polyolefin on the outermost surface and inside in the thickness direction of the resin coating layer 3 is preferably 0.030 $\mu$m or more and more preferably 0.050 $\mu$m or more. The dispersed particle size of the polyolefin on the outermost surface and inside in the thickness direction of the resin coating layer 3 is preferably 3.0 $\mu$m or less, more preferably 2.0 $\mu$m or less, and further preferably 1.0 $\mu$m or less. The dispersed particle size of the polyolefin on the outermost surface and inside in the thickness direction of the resin coating layer 3 is measured according to the method described in the EXAMPLES section below.

One conventional method of measuring the dispersed particle size of the lubricating component is to use a chemical force microscope (CFM). In this method, only the surface of the resin coating layer is observed in a visual field area of 1 $\mu$m $\times$ 1 $\mu$m, and the dispersed particle size of the observed particles of the lubricating component is calculated from the major and minor axis lengths. In the case where Raman spectroscopy is used as in the present disclosure, on the other hand, a visual field of 50 $\mu$m (the lamination direction of the resin-coated metal sheet) $\times$ 50 $\mu$m (the direction perpendicular to the lamination direction within the sheet surface of the resin-coated metal sheet) $\times$ 3 $\mu$m (the thickness direction of the resin-coated metal sheet), which is a wider range than in the conventional method and also involves the thickness direction, is measured and the dispersed particle size is calculated. Thus, Raman spectroscopy can capture more dispersed particles of the polyolefin in the resin coating layer than the conventional method and obtain a highly accurate dispersed particle size.

Another conventional method is to etch the polyester resin in the surface layer of the resin coating layer with an alkaline aqueous solution, measure the major and minor axis lengths of each of the remaining modified polyolefin particles, and calculate the particle size. This method is a destructive measurement, and is unable to capture the dispersion state of the modified polyolefin particles actually dispersed in the resin coating layer. In addition, when the resin coating layer is etched with the alkaline aqueous solution, the shape and particle size of the extracted modified polyolefin particles may differ from the state of dispersion in the resin coating layer. It is therefore difficult to determine how much the modified polyolefin particles contribute to the required performance of the resin coating layer or the resin-laminated metal sheet by this method. In the case where Raman spectroscopy is used as in the present disclosure, on the other hand, the particle size and dispersion state of the polyolefin actually dispersed in the resin coating layer can be captured non-destructively with high resolution, so that how much the dispersed particles of the polyolefin contribute to the required performance can be determined with high accuracy.

The content of the polyolefin in the outermost layer 3a is preferably 0.10 mass% or more and preferably 1.0 mass% or less in terms of solid content. If the content of the polyolefin in the outermost layer 3a is 0.10 mass% or more, more favorable slidability and scraping resistance can be ensured during forming and fracturing or scraping of the resin coating layer 3 can be prevented. If the content of the polyolefin in the outermost layer 3a is 1.0 mass% or less, more favorable scraping resistance and ink adhesion can be achieved. The content of the polyolefin in the outermost layer 3a is more preferably 0.20 mass% or more and further preferably 0.40 mass% or more. The content of the polyolefin in the outermost layer 3a is more preferably 0.90 mass% or less and further preferably 0.80 mass% or less.

The weight-average molecular weight of the polyolefin is preferably 2500 or more and preferably 80000 or less. If the weight-average molecular weight of the polyolefin is 2500 or more, the polyolefin can be more favorably prevented from concentrating on the surface of the resin coating layer 3 and the ink adhesion can be further improved. If the weight-average molecular weight of the polyolefin is 80000 or less, more favorable slidability and scraping resistance can be ensured during forming and fracturing or scraping of the resin coating layer 3 can be prevented more favorably. The weight-average molecular weight of the polyolefin is more preferably 3000 or more and further preferably 3500 or more. The weight-average molecular weight of the polyolefin is more preferably 70000 or less and further preferably 65000 or less. The weight-average molecular weight of the polyolefin is measured according to the method described in the EXAMPLES section below.

The acid value of the polyolefin is preferably 1.0 mgKOH/g or more and preferably 80 mgKOH/g or less. If the acid value of the polyolefin is 1.0 mgKOH/g or more, sufficient affinity between the resin coating layer 3 and the printing ink can be ensured and the adhesion of the printing ink can be improved. If the acid value of the polyolefin is 80 mgKOH/g or less, the polyolefin is not compatible with the resin coating layer 3, so that more favorable slidability and scraping resistance can be ensured and fracturing or scraping during forming can be prevented more favorably. The acid value of the polyolefin is more preferably 1.5 mgKOH/g or more and further preferably 2.0 mgKOH/g or more. The acid value of the polyolefin is more preferably 50 mgKOH/g or less and further preferably 45 mgKOH/g or less. The acid value of the polyolefin is measured according to the method described in the EXAMPLES section below.

The resin coating layer 3 is sometimes required to be white in order to enhance the design and quality of the appearance of the can body after printing. In this case, the intermediate layer 3b in the resin coating layer 3 preferably contains inorganic particles. As a result of the intermediate layer 3b containing inorganic particles, the resin coating layer 3 can be made white.

The content of the inorganic particles in the intermediate layer 3b is preferably 10 mass% or more and preferably 30 mass% or less in terms of solid content. If the content of the inorganic particles in the intermediate layer 3b is 10 mass% or more, sufficient whiteness can be ensured. If the content of the inorganic particles in the intermediate layer 3b is 30 mass% or less, fracturing or scraping of the resin coating layer 3 can be prevented more favorably even during processing under more severe processing conditions. The content of the inorganic particles in the intermediate layer 3b is more preferably 12 mass% or more and further preferably 15 mass% or more. The content of the inorganic particles in the intermediate layer 3b is more preferably 25 mass% or less and further preferably 20 mass% or less.

The inorganic particles contained in the intermediate layer 3b are not limited. The inorganic particles are preferably titanium oxide. The titanium oxide is preferably rutile-type titanium oxide having a purity of 90 % or more. If the inorganic particles contained in the intermediate layer 3b are such titanium oxide, the titanium oxide exhibits good dispersibility when mixed with the polyester resin, and the design and quality of the appearance are improved with uniform whiteness.

In the case where the resin coating layer 3 has at least a three-layer structure consisting of the outermost layer 3a, the intermediate layer 3b, and the undermost layer 3c, the thickness of each of the outermost layer 3a and the undermost layer 3c is preferably 1.0 $\mu$m or more and preferably 5.0 $\mu$m or less. The outermost layer 3a and the undermost layer 3c may have different thicknesses. As a result of the thickness of each of the outermost layer 3a and the undermost layer 3c being within this range, more favorable slidability and scraping resistance can be ensured during forming and fracturing or scraping of the resin coating layer 3 can be prevented more favorably. The thickness of each of the outermost layer 3a and the undermost layer 3c is more preferably 1.5 $\mu$m or more and further preferably 2.0 $\mu$m or more. The thickness of each of the outermost layer 3a and the undermost layer 3c is more preferably 4.0 $\mu$m or less and further preferably 3.0 $\mu$m or less. The thickness of each of the outermost layer 3a and the undermost layer 3c is measured according to the method described in the EXAMPLES section below.

The thickness of the intermediate layer 3b is preferably 6.0 $\mu$m or more and preferably 30 $\mu$m or less. As a result of the thickness of the intermediate layer 3b being within this range, there is no need to vary the thicknesses of the outermost layer 3a and the undermost layer 3c, and the increase or decrease in the absolute amount of the polyolefin is suppressed. This allows the dispersed particle size to be within the appropriate range, so that fracturing or scraping of the resin coating layer 3 during forming can be prevented more favorably. Moreover, the adhesion of the printing ink to the resin coating layer 3 can be further improved. The thickness of the intermediate layer 3b is more preferably 8.0 $\mu$m or more and further preferably 10 $\mu$m or more. The thickness of the intermediate layer 3b is more preferably 25 $\mu$m or less and further preferably 20 $\mu$m or less. The thickness of the intermediate layer 3b is measured according to the method described in the EXAMPLES section below.

The outermost layer 3a and the undermost layer 3c preferably contain 95 mass% or more and 100 mass% or less of polyester resin in terms of solid content. The intermediate layer 3b preferably contains 70 mass% or more and 100 mass% or less of polyester resin in terms of solid content. Herein, the content of the polyester resin refers to the proportion of the polyester resin in the resin minus the weights of additives such as polyolefin contained in the resin coating layer 3.

The above-described resin-coated metal sheet can be used to produce a metal container that achieves both the slidability and scraping resistance of the resin coating layer 3 and the ink adhesion. The metal container may be produced by a conventional method.

Next, an example of a method of producing the resin-coated metal sheet will be described. In one example, the method of producing the resin-coated metal sheet includes pressure-bonding a resin film having at least a three-layer structure including an outermost film, an intermediate film, and an undermost film to at least one side of the metal sheet to form the resin coating layer 3. After pressure bonding to the metal sheet, the outermost film, the intermediate film, and the undermost film become the outermost layer 3a, the intermediate layer 3b, and the undermost layer 3c respectively.

In the production of the resin-coated metal sheet, the resin film to be pressure-bonded to the metal sheet is produced first. The method of producing the resin film is not limited. In one example, first, a polyolefin is added to a resin containing 75 mass% or more of polyester resin relative to the total resin, in order to cause the polyolefin to be contained in the outermost film. The method of adding the polyolefin to the resin is not limited, but a method using a master batch wherein the polyolefin is dispersed at a high concentration in the resin using a kneading extruder is preferable. During film production, resin pellets and the master batch are mixed at a certain ratio and introduced into the kneading extruder. When mixing the resin pellets and the master batch, it is preferable to set the extrusion temperature to a temperature higher than the melting point of the resin pellets. In one example, it is preferable to perform mixing at an extrusion temperature of 260 °C or higher, which is 30 °C higher than the melting point of the polyester resin. The extrusion temperature is preferably 284 °C or lower. In order to control the dispersed particle size of the polyolefin, the extrusion temperature is more preferably 265 °C or higher. Moreover, in order to control the dispersed particle size of the polyolefin, the screw speed of the extruder is preferably 12 rpm or more and 18 rpm or less. Inorganic particles may be optionally mixed into the resin for forming the intermediate film.

In one example, the mixture of the polyolefin and the resin for forming the outermost film, the resin for forming the intermediate film, and the resin for forming the undermost film are co-extruded and formed into a sheet and discharged using a T-die, and extruded onto a cooling body such as a cast drum. By cooling and solidifying the extruded sheet, a non-stretched laminated film can be obtained.

After the non-stretched laminated film is produced, it is preferable to biaxially stretch the laminated film once in the film production direction and once in the direction perpendicular to the film production direction to obtain the resin film. In order to control the dispersed particle size of the polyolefin, the stretching ratio after the non-stretched laminated film is produced is preferably 2.0 times or more and more preferably 3.0 times or more. The stretching ratio after the non-stretched laminated film is produced is preferably 5.0 times or less and more preferably 4.5 times or less.

The produced resin film is heated to the melting start temperature or higher and pressure-bonded to the metal sheet by a lamination roller (thermocompression bonding film lamination method). The thermocompression bonding film lamination method is excellent in that production costs are reduced and energy-saving production is possible.

The production conditions other than those described above may be in accordance with conventional methods.

EXAMPLES

TFS having a thickness of 0.22 mm, a metal chromium layer of 120 mg/m$^2$ per side, a chromium oxide layer of 10 mg/m$^2$ per side in terms of metal chromium, and a temper of T3CA was used as a metal sheet. The mechanical properties of the metal sheet were as follows: YP: 400 MPa, r-value: 1.0, and $\Delta$r: 0.5. In addition, a resin film having a three-layer structure was produced by biaxial stretching using the resin, polyolefin, and titanium oxide shown in Tables 1 and 2. The resin coating layer used in each of Examples and Comparative Examples was a resin coating layer containing 100 mass% of polyester resin relative to the total resin. The composition of the resin is shown in Tables 1 and 2. The metal sheet was heated, and the resin film was thermocompression-bonded to both the front and back sides of the metal sheet by a thermocompression bonding film lamination method. After 1.5 seconds had elapsed since the thermocompression bonding, the metal sheet to which the resin film had been thermocompression-bonded was water-cooled in a water cooling tank. Thus, the resin coating layer of each of Examples 1 to 22 and Comparative Examples 1 to 8 was formed on both sides of the metal sheet. The outermost layer contained the polyolefin in the amount shown in Tables 1 and 2. The intermediate layer contained the titanium oxide in the amount shown in Tables 1 and 2. The coating conditions are as shown in Tables 1 and 2. In Comparative Example 7, paraffin wax was added instead of polyolefin. The items for Comparative Example 7 in Table 2 show the addition amount, melting point, weight-average molecular weight, and dispersed particle size of paraffin wax.

For each resin-coated metal sheet produced by the foregoing method, the melting point of the resin coating layer, the melting point of the polyolefin, the dispersed particle size of the polyolefin present on the outermost surface and inside of the resin coating layer, the weight-average molecular weight of the polyolefin, the acid value of the polyolefin, and the thickness of each layer in the resin coating layer were analyzed by the following methods.

(1) Melting point of resin coating layer

First, the resin-coated metal sheet for containers was immersed in a mixed solution of concentrated hydrochloric acid (30 wt%) and distilled water in a ratio of 1:1 at room temperature, to dissolve the metal sheet and thereby peel off the resin coating layer. The peeled resin coating layer was measured using a differential scanning calorimeter DSC Q100 produced by TA Instruments under the conditions of atmosphere gas: $N_2$, flow rate: 50 ml/min, temperature range: room temperature to 290 °C, and heating rate: 10 °C/min. The peak top temperature of the endothermic peak in the range of 200 °C to 280 °C in the obtained heat flow was taken to be the melting point.

(2) Melting point of polyolefin

After peeling off the resin coating layer from the resin-coated metal sheet in the same manner as in (1), the resin coating layer was dissolved using hexafluoro-2-propanol (HFIP) as a solvent. The dissolved resin coating layer was centrifuged and then pressure-filtered with filters having pore sizes of 1 $\mu$m and 0.1 $\mu$m in sequence to extract the polyolefin contained in the outermost layer in the resin coating layer. Further, Soxhlet extraction was performed on the filters using xylene as a solvent to additionally extract the polyolefin after concentration, reprecipitation, and centrifugation. The lubricating component extracted in the above manner was measured using a differential scanning calorimeter DSC Q100 produced by TA Instruments under the conditions of atmosphere gas: $N_2$, flow rate: 50 ml/min, temperature range: room temperature to 290 °C, and heating rate: 10 °C/min. The peak top temperature of the endothermic peak in the range of 70 °C to 150 °C in the obtained heat flow was taken to be the melting point.

(3) Dispersed particle size of polyolefin present on outermost surface and inside of resin coating layer

Using a microscopic laser Raman spectrometer LabRAM HR VIS-NIR produced by Horiba Ltd., the Raman spectrum of the outermost surface of the resin-coated metal sheet was measured by Raman spectroscopy with confocal laser under the conditions of laser power: 10 %, aperture: 25 $\mu$m, exposure time: 0.08 sec, exposure count: 1, grating: 300 lines/mm, objective lens: 100 times, and wave number range: 310 $cm^{-1}$ to 3400 $cm^{-1}$. The measurement range was 50 $\mu$m (the lamination direction of the resin-coated metal sheet) $\times$ 50 $\mu$m (the direction perpendicular to the lamination direction within the sheet surface of the resin-coated metal sheet) $\times$ 3 $\mu$m (the thickness direction of the resin-coated metal sheet). The measurement pitch was 0.5 $\mu$m in the lamination direction, the direction perpendicular to the lamination direction in the sheet plane, and the thickness direction. Based on the obtained Raman spectroscopy data, the intensity ratio of the CH stretching vibration peak (2850 $cm^{-1}$) derived from polyethylene and the CH stretching vibration peak (2960 $cm^{-1}$) derived from polyester as the main component of the resin coating layer was calculated and mapped to calculate the major axis length of each dispersed particle of polyolefin. Three visual fields were randomly selected for each sample, and all dispersed particles of polyolefin within each measurement visual field were measured.

(4) Weight-average molecular weight of polyolefin

The polyolefin extracted in the same manner as in (2) was measured using a gel permeation chromatograph analyzer PL-GPC220 produced by Agilent Technologies, Inc. under the conditions of columns: two Agilent PLgel Olexis columns + Guard and eluent: o-dichlorobenzene. A calibration curve was created from the molecular weight and elution time of standard polystyrene. Using the calibration curve, the weight-average molecular weight of the polyolefin was calculated based on the elution time of the polyolefin.

(5) Acid value of polyolefin

The acid value of the polyolefin extracted in the same manner as in (2) was measured in accordance with JIS K5902. According to JIS K5902, a certain amount of polyolefin corresponding to the estimated acid value was weighed into a flask and dissolved in 100 ml of a neutral solvent. The solution was then titrated with 0.1 mol/L potassium hydroxide standard solution using phenolphthalein as an indicator. Assuming that the end point of neutralization was when the indicator continued to change color for 30 seconds, the acid value was calculated using the following formula:

$$(\text{Acid value}) = 5.611 \times A \times F/B$$

where A is the amount of the 0.1 mol/L potassium hydroxide standard solution used (ml), B is the amount of the sample taken (g), and F is the factor of the 0.1mol/L potassium hydroxide standard solution.

(6) Thickness of each layer in resin coating layer

After peeling off the resin coating layer from the resin-coated metal sheet in the same manner as in (1), a Pt coat was applied to the outermost surface of the resin coating layer, and a cross section was prepared using an ion milling device EM TIC 3X produced by Leica Microsystems. For the prepared cross section, reflected electron images were observed using a scanning electron microscope (SEM) Regulus 8220 produced by Hitachi High-Tech Corporation at two magnifications, 2500 times and 8000 times, and the thicknesses of the outermost layer, intermediate layer, and undermost layer in the resin coating layer were calculated from the images.

For each of the resin-coated metal sheets of Examples 1 to 22 and Comparative Examples 1 to 8, the slidability and scraping resistance of the resin coating layer and the ink adhesion were evaluated by the following methods. The evaluation results are shown in Table 3.

(7) Evaluation of slidability and scraping resistance

Each of the resin-coated metal sheets of Examples 1 to 22 and Comparative Examples 1 to 8 was blanked into a circle with a diameter of 68 mm, and a sliding test was conducted using a rotary wear tester produced by Takachiho-Seiki. Co., Ltd. with a carbide ball indenter ($\Phi$10 mm) under the conditions of load: 44 N, sample temperature: 145 $\pm$ 3 °C, rotation speed: 370 rpm, and rotation radius: 20 mm. Four tests were conducted for each sample. The slidability was evaluated from the obtained friction coefficient, and the scraping resistance was visually evaluated from the degree of scraping of the resin coating layer after testing.

Evaluation criteria for slidability

Rating "○": Friction coefficient of 0.135 or less.
Rating "△": Friction coefficient of more than 0.135 and less than 0.160.
Rating "×": Friction coefficient of 0.160 or more.

Evaluation criteria for scraping resistance

Rating "O": No scraping was observed visually in any of the four sample tests.
Rating "△": Scraping was observed visually in one of the four sample tests.
Rating "×": Scraping was observed visually in two or more of the four sample tests.

(8) Evaluation of ink adhesion

Each of the resin-coated metal sheets of Examples 1 to 22 and Comparative Examples 1 to 8 was subjected to a heat treatment in a hot air drying oven to reach 240 °C in 2 minutes, and then cooled to room temperature. After the heat treatment, polyester-based printing ink (red) was printed on the resin coating layer of each sample using a universal printing tester produced by Kumagai Riki Kogyo Co., Ltd., subjected to a heat treatment in a hot air drying oven to reach 180°C in 1 minute, and then cooled to room temperature. A scratch test was conducted on the ink-printed surface of the obtained sample in the lamination direction of the sample using a load-varying friction and wear tester HHS2000 produced by Shinto Scientific Co., Ltd. with a sapphire indenter ($\Phi$0.6 mm) under the conditions of continuous load from the printing end: 10 gf to 500 gf, moving speed: 0.5 mm/sec, and moving distance: 30 mm. Ten tests were conducted for each sample (two sheets $\times$ five tests), and the ink peel load was calculated from the resulting ink peel length to evaluate the ink adhesion.

[Evaluation criteria for ink adhesion]

Rating "O": Average peel load of 100 g or more.
Rating "△": Average peel load of 80 g or more and less than 100 g.
Rating "×": Average peel load of less than 80 g.

[Table 1]

[Table 1]

| | Resin composition [mol%] | TiO$_2$ amount [mass%] | Polyolefin | Addition amount of polyolefin [mass%] | Melting point of polyolefin [°C] | Weight-average molecular weight of polyolefin | Acid value of polyolefin [mgKOH/g] | Dispersed particle size of polyolefin [μm] | Thickness [μm] | | | Melting point of resin coating layer [°C] | Lamination conditions | |
| | | | | | | | | | Outermost layer | Intermediate layer | Undermost layer | | Metal sheet temperature [°C] | Lamination roller temperature [°C] |
|---|---|---|---|---|---|---|---|---|---|---|---|---|---|---|
| Example 1 | Ethylene ter-ephthalate 90 Ethylene iso-phthalate 10 | 15 | Acid-modified polyethylene | 0.6 | 116 | 30000 | 30 | 0.018 to 1.8 | 2.5 | 15 | 2.5 | 235 | 250 | 83 |
| Example 2 | Ethylene ter-ephthalate 96 Ethylene iso-phthalate 4 | 15 | Acid-modified polyethylene | 0.6 | 116 | 30000 | 30 | 0.018 to 1.8 | 2.5 | 15 | 2.5 | 247 | 250 | 83 |
| Example 3 | Ethylene ter-ephthalate 98 Ethylene iso-phthalate 2 | 15 | Acid-modified polyethylene | 0.6 | 116 | 30000 | 30 | 0.018 to 1.8 | 2.5 | 15 | 2.5 | 252 | 250 | 83 |
| Example 4 | Ethylene ter-ephthalate 96 Ethylene iso-phthalate 4 | 15 | Oxidized polyethylene | 0.6 | 102 | 30000 | 18 | 0.018 to 1.8 | 2.5 | 15 | 2.5 | 247 | 250 | 83 |
| Example 5 | Ethylene ter-ephthalate 96 Ethylene iso-phthalate 4 | 15 | Acid-modified polyethylene | 0.6 | 90 | 30000 | 30 | 0.018 to 1.8 | 2.5 | 15 | 2.5 | 247 | 250 | 83 |
| Example 6 | Ethylene ter-ephthalate 96 Ethylene iso-phthalate 4 | 15 | Acid-modified polyethylene | 0.6 | 120 | 30000 | 30 | 0.018 to 1.8 | 2.5 | 15 | 2.5 | 247 | 250 | 83 |
| Example 7 | Ethylene ter-ephthalate 96 Ethylene iso-phthalate 4 | 15 | Acid-modified polyethylene | 0.6 | 137 | 30000 | 30 | 0.018 to 1.8 | 2.5 | 15 | 2.5 | 247 | 250 | 83 |

| | Resin composition [mol%] | TiO$_2$ amount [mass%] | Polyolefin | Addition amount of polyolefin [mass%] | Melting point of polyolefin [°C] | Weight-average molecular weight of polyolefin | Acid value of polyolefin [mgKOH/g] | Dispersed particle size of polyolefin [μm] | Thickness [μm] | | | Melting point of resin coating layer [°C] | Lamination conditions | |
|---|---|---|---|---|---|---|---|---|---|---|---|---|---|---|
| | | | | | | | | | Outermost layer | Intermediate layer | Undermost layer | | Metal sheet temperature [°C] | Lamination roller temperature [°C] |
| Example 8 | Ethylene terephthalate 96 Ethylene isophthalate 4 | 15 | Acid-modified polyethylene | 0.2 | 116 | 30000 | 30 | 0.018 to 0.6 | 2.5 | 15 | 2.5 | 247 | 250 | 83 |
| Example 9 | Ethylene terephthalate 96 Ethylene isophthalate 4 | 15 | Acid-modified polyethylene | 0.5 | 116 | 30000 | 30 | 0.018 to 1.5 | 2.5 | 15 | 2.5 | 247 | 250 | 83 |
| Example 10 | Ethylene terephthalate 96 Ethylene isophthalate 4 | 15 | Acid-modified polyethylene | 1.0 | 116 | 30000 | 30 | 0.018 to 4.0 | 2.5 | 15 | 2.5 | 247 | 250 | 83 |
| Example 11 | Ethylene terephthalate 96 Ethylene isophthalate 4 | 15 | Acid-modified polyethylene | 0.05 | 116 | 30000 | 30 | 0.018 to 0.2 | 2.5 | 15 | 2.5 | 247 | 250 | 83 |
| Example 12 | Ethylene terephthalate 96 Ethylene isophthalate 4 | 15 | Acid-modified polyethylene | 2.0 | 116 | 30000 | 30 | 0.018 to 5.0 | 2.5 | 15 | 2.5 | 247 | 250 | 83 |
| Example 13 | Ethylene terephthalate 96 Ethylene isophthalate 4 | 15 | Acid-modified polyethylene | 0.6 | 116 | 2000 | 30 | 0.018 to 1.8 | 2.5 | 15 | 2.5 | 247 | 250 | 83 |
| Example 14 | Ethylene terephthalate 96 Ethylene isophthalate 4 | 15 | Acid-modified polyethylene | 0.6 | 116 | 85000 | 30 | 0.018 to 1.8 | 2.5 | 15 | 2.5 | 247 | 250 | 83 |

EP 4 582 250 A1

| | Resin composition [mol%] | TiO$_2$ amount [mass%] | Polyolefin | Addition amount of polyolefin [mass%] | Melting point of polyolefin [°C] | Weight-average molecular weight of polyolefin | Acid value of polyolefin [mgKOH/g] | Dispersed particle size of polyolefin [μm] | Thickness [μm] | | | Melting point of resin coating layer [°C] | Lamination conditions | |
|---|---|---|---|---|---|---|---|---|---|---|---|---|---|---|
| | | | | | | | | | Outermost layer | Intermediate layer | Undermost layer | | Metal sheet temperature [°C] | Lamination roller temperature [°C] |
| Example 15 | Ethylene ter-ephthalate 96 Ethylene iso-phthalate 4 | 15 | Polyethylene | 0.6 | 116 | 30000 | 0.0 | 0.018 to 1.8 | 2.5 | 15 | 2.5 | 247 | 250 | 83 |
| Example 16 | Ethylene ter-ephthalate 96 Ethylene iso-phthalate 4 | 15 | Acid-modified polyethylene | 0.6 | 116 | 30000 | 0.8 | 0.018 to 1.8 | 2.5 | 15 | 2.5 | 247 | 250 | 83 |
| Example 17 | Ethylene ter-ephthalate 96 Ethylene iso-phthalate 4 | 15 | Acid-modified polyethylene | 0.6 | 116 | 30000 | 90 | 0.018 to 1.8 | 2.5 | 15 | 2.5 | 247 | 250 | 83 |
| Example 18 | Ethylene ter-ephthalate 96 Ethylene iso-phthalate 4 | 5.0 | Acid-modified polyethylene | 0.6 | 116 | 30000 | 30 | 0.018 to 1.8 | 2.5 | 15 | 2.5 | 247 | 250 | 83 |
| Example 19 | Ethylene ter-ephthalate 96 Ethylene iso-phthalate 4 | 40 | Acid-modified polyethylene | 0.6 | 116 | 30000 | 30 | 0.018 to 1.8 | 2.5 | 15 | 2.5 | 247 | 250 | 83 |
| Example 20 | Ethylene ter-ephthalate 96 Ethylene iso-phthalate 4 | 15 | Acid-modified polyethylene | 0.6 | 116 | 30000 | 30 | 0.018 to 1.8 | 0.8 | 16.7 | 2.5 | 247 | 250 | 83 |
| Example 21 | Ethylene ter-ephthalate 96 Ethylene iso-phthalate 4 | 15 | Acid-modified polyethylene | 0.6 | 116 | 30000 | 30 | 0.018 to 1.8 | 1.0 | 13.5 | 5.5 | 247 | 250 | 83 |

| | Resin composition [mol%] | TiO$_2$ amount [mass%] | Polyolefin | Addition amount of polyolefin [mass%] | Melting point of polyolefin [°C] | Weight-average molecular weight of polyolefin | Acid value of polyolefin [mgKOH/g] | Dispersed particle size of polyolefin [μm] | Thickness [μm] | | | Melting point of resin coating layer [°C] | Lamination conditions | |
|---|---|---|---|---|---|---|---|---|---|---|---|---|---|---|
| | | | | | | | | | Outermost layer | Intermediate layer | Undermost layer | | Metal sheet temperature [°C] | Lamination roller temperature [°C] |
| Example 22 | Ethylene ter-ephthalate 96 Ethylene iso-phthalate 4 | 15 | Acid-modified polyethylene | 0.6 | 116 | 30000 | 30 | 0.018 to 1.8 | 7.5 | 5.5 | 7.0 | 247 | 250 | 83 |

[Table 2]

[Table 2]

[Table 2]

| | Resin composition [mol%] | TiO$_2$ amount [mass%] | Polyolefin | Addition amount of polyolefin [mass%] | Melting point of polyolefin [°C] | Weight-average molecular weight of polyolefin | Acid value of polyolefin [mgKOH/g] | Dispersed particle size of polyolefin [μm] | Thickness [μm] | | | Melting point of resin coating layer [°C] | Lamination conditions | |
| | | | | | | | | | Outermost layer | Intermediate layer | Undermost layer | | Metal sheet temperature [°C] | Lamination roller temperature [°C] |
|---|---|---|---|---|---|---|---|---|---|---|---|---|---|---|
| Comparative Example 1 | Ethylene ter-ephthalate 85 Ethylene iso-phthalate 15 | 15 | Acid-modified polyethylene | 0.6 | 116 | 30000 | 30 | 0.018 to 1.8 | 2.5 | 15 | 2.5 | 220 | 250 | 83 |
| Comparative Example 2 | Ethylene ter-ephthalate 99 Ethylene iso-phthalate 1 | 15 | Acid-modified polyethylene | 0.6 | 116 | 30000 | 30 | 0.018 to 1.8 | 2.5 | 15 | 2.5 | 260 | 250 | 83 |
| Comparative Example 3 | Ethylene ter-ephthalate 96 Ethylene iso-phthalate 4 | 15 | Acid-modified polyethylene | 0.6 | 70 | 30000 | 30 | 0.018 to 1.8 | 2.5 | 15 | 2.5 | 247 | 250 | 83 |
| Comparative Example 4 | Ethylene ter-ephthalate 96 Ethylene iso-phthalate 4 | 15 | Acid-modified polyethylene | 0.02 | 116 | 30000 | 30 | <0.010 | 2.5 | 15 | 2.5 | 247 | 250 | 83 |
| Comparative Example 5 | Ethylene ter-ephthalate 96 Ethylene iso-phthalate 4 | 15 | Acid-modified polyethylene | 2.5 | 116 | 30000 | 30 | >6.0 | 2.5 | 15 | 2.5 | 247 | 250 | 83 |
| Comparative Example 6 | Ethylene ter-ephthalate 96 Ethylene iso-phthalate 4 | 15 | - | 0.0 | - | - | - | - | 2.5 | 15 | 2.5 | 247 | 250 | 83 |
| Comparative Example 7 | Ethylene ter-ephthalate 96 Ethylene iso-phthalate 4 | 15 | Paraffin wax | 0.5 | 60 | 450 | - | 0.020 to 4.0 | 2.5 | 15 | 2.5 | 247 | 250 | 83 |

(continued)

| | Resin composition [mol%] | TiO$_2$ amount [mass%] | Polyolefin | Addition amount of polyolefin [mass%] | Melting point of polyolefin [°C] | Weight-average molecular weight of polyolefin | Acid value of polyolefin [mgKOH/g] | Dispersed particle size of polyolefin [μm] | Thickness [μm] | | | Melting point of resin coating layer [°C] | Lamination conditions | |
|---|---|---|---|---|---|---|---|---|---|---|---|---|---|---|
| | | | | | | | | | Outermost layer | Intermediate layer | Undermost layer | | Metal sheet temperature [°C] | Lamination roller temperature [°C] |
| Comparative Example 8 | Ethylene terephthalate 96 Ethylene isophthalate 4 | 15 | Metallocene polypropylene | 0.5 | 165 | 23000 | - | 0.020 to 4.0 | 2.5 | 15 | 2.5 | 247 | 250 | 83 |
| Underlines indicate outside the appropriate range of the present disclosure. | | | | | | | | | | | | | | |

[Table 3]

[Table 3]

| | Slidability | | Scraping resistance | Ink adhesion | |
| --- | --- | --- | --- | --- | --- |
| | Friction coefficient | Rating | Rating | Average peel load [g] | Rating |
| Example 1 | 0.110 | ○ | ○ | 120 | ○ |
| Example 2 | 0.110 | ○ | ○ | 120 | ○ |
| Example 3 | 0.110 | ○ | ○ | 120 | ○ |
| Example 4 | 0.110 | ○ | ○ | 110 | ○ |
| Example 5 | 0.110 | ○ | ○ | 105 | ○ |
| Example 6 | 0.110 | ○ | ○ | 120 | ○ |
| Example 7 | 0.110 | ○ | ○ | 120 | ○ |
| Example 8 | 0.130 | ○ | ○ | 130 | ○ |
| Example 9 | 0.115 | ○ | ○ | 122 | ○ |
| Example 10 | 0.090 | ○ | ○ | 100 | ○ |
| Example 11 | 0.140 | Δ | Δ | 135 | ○ |
| Example 12 | 0.060 | ○ | Δ | 90 | Δ |
| Example 13 | 0.110 | ○ | ○ | 95 | Δ |
| Example 14 | 0.110 | ○ | Δ | 125 | ○ |
| Example 15 | 0.110 | ○ | ○ | 85 | Δ |
| Example 16 | 0.110 | ○ | ○ | 90 | Δ |
| Example 17 | 0.140 | Δ | Δ | 130 | ○ |
| Example 18 | 0.110 | ○ | ○ | 120 | ○ |
| Example 19 | 0.110 | ○ | Δ | 120 | ○ |
| Example 20 | 0.138 | Δ | Δ | 120 | ○ |
| Example 21 | 0.137 | Δ | Δ | 120 | ○ |
| Example 22 | 0.110 | ○ | ○ | 95 | Δ |
| Comparative Example 1 | 0.120 | ○ | × | 120 | ○ |
| Comparative Example 2 | 0.120 | ○ | × | 120 | ○ |
| Comparative Example 3 | 0.100 | ○ | ○ | 78 | × |
| Comparative Example 4 | 0.165 | × | × | 138 | ○ |
| Comparative Example 5 | 0.055 | ○ | × | 75 | × |
| Comparative Example 6 | 0.175 | × | × | 140 | ○ |
| Comparative Example 7 | 0.170 | × | × | 65 | × |
| Comparative Example 8 | 0.165 | × | × | 88 | Δ |

REFERENCE SIGNS LIST

1    resin-coated metal sheet
2    metal sheet

3      resin coating layer
3a    outermost layer
3b    intermediate layer
3c    undermost layer
4      resin coating layer

**Claims**

1.  A resin-coated metal sheet comprising:

    a metal sheet; and
    a resin coating layer containing 75 mass% or more of polyester resin relative to total resin, on at least one side of the metal sheet,
    wherein the resin coating layer has at least a three-layer structure including an outermost layer, an intermediate layer, and an undermost layer,
    a melting point of the resin coating layer is 230 °C or higher and 254 °C or lower,
    the outermost layer contains a polyolefin,
    a melting point of the polyolefin is 80 °C or higher and 140 °C or lower, and
    a dispersed particle size of the polyolefin on an outermost surface and inside in a thickness direction of the resin coating layer measured by Raman spectroscopy is 0.018 $\mu$m or more and 5.0 $\mu$m or less.

2.  The resin-coated metal sheet according to claim 1, wherein the outermost layer contains 0.10 mass% or more and 1.0 mass% or less of the polyolefin.

3.  The resin-coated metal sheet according to claim 1 or 2, wherein a weight-average molecular weight of the polyolefin is 2500 or more and 80000 or less.

4.  The resin-coated metal sheet according to any one of claims 1 to 3, wherein the polyolefin is at least one of an acid-modified polyolefin and an oxidized polyolefin.

5.  The resin-coated metal sheet according to any one of claims 1 to 4, wherein an acid value of the polyolefin is 1.0 mgKOH/g or more and 80 mgKOH/g or less.

6.  The resin-coated metal sheet according to any one of claims 1 to 5, wherein the intermediate layer contains 10 mass% or more and 30 mass% or less of inorganic particles.

7.  The resin-coated metal sheet according to any one of claims 1 to 6, wherein a thickness of each of the outermost layer and the undermost layer is 1.0 $\mu$m or more and 5.0 $\mu$m or less, and a thickness of the intermediate layer is 6.0 $\mu$m or more and 30 $\mu$m or less.

8.  A metal container produced using the resin-coated metal sheet according to any one of claims 1 to 7, wherein the resin coating layer is located on an outside of the metal container.

# *FIG. 1*

## INTERNATIONAL SEARCH REPORT

| International application No. |
|---|
| **PCT/JP2023/021046** |

**A.    CLASSIFICATION OF SUBJECT MATTER**

*B32B 15/09*(2006.01)i; *B32B 27/36*(2006.01)i; *B65D 25/36*(2006.01)i; *B65D 65/40*(2006.01)i; *B65D 65/42*(2006.01)i
FI:    B32B15/09 A; B32B27/36; B65D25/36; B65D65/40 D; B65D65/42 A

According to International Patent Classification (IPC) or to both national classification and IPC

**B.    FIELDS SEARCHED**

Minimum documentation searched (classification system followed by classification symbols)

B32B1/00-43/00; B65D23/00-25/56; B65D65/00-65/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2019/116707 A1 (JFE STEEL CORP.) 20 June 2019 (2019-06-20)<br>      claims 1-9, paragraphs [0011], [0020], [0035]-[0043], [0049]-[0054], [0057], [0061], fig. 1 | 1-8 |
| A | WO 2019/116706 A1 (JFE STEEL CORP.) 20 June 2019 (2019-06-20)<br>      entire text, all drawings | 1-8 |
| A | WO 2018/221385 A1 (JFE STEEL CORP.) 06 December 2018 (2018-12-06)<br>      entire text, all drawings | 1-8 |
| A | JP 2021-160330 A (TOYO KOHAN CO., LTD.) 11 October 2021 (2021-10-11)<br>      entire text, all drawings | 1-8 |
| A | JP 2010-23442 A (TOYOBO CO., LTD.) 04 February 2010 (2010-02-04)<br>      entire text, all drawings | 1-8 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/021046**

| Patent document cited in search report | | | Publication date (day/month/year) | Patent family member(s) | Publication date (day/month/year) |
|---|---|---|---|---|---|
| WO | 2019/116707 | A1 | 20 June 2019 | US 2020/0377274 A1 claims 10-26, paragraphs [0017], [0026], [0045]-[0053], [0059]-[0071], tables 2, 6, fig. 1<br>EP 3725511 A1<br>KR 10-2020-0078654 A<br>CN 111511545 A | |
| WO | 2019/116706 | A1 | 20 June 2019 | US 2020/0338863 A1 entire text, all drawings<br>EP 3725512 A1<br>KR 10-2020-0078655 A<br>CN 111479688 A | |
| WO | 2018/221385 | A1 | 06 December 2018 | US 2020/0172308 A1 entire text, all drawings<br>EP 3616904 A1 | |
| JP | 2021-160330 | A | 11 October 2021 | EP 4129647 A1 entire text, all drawings<br>CN 115298025 A | |
| JP | 2010-23442 | A | 04 February 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019116706 A1

- WO 2019116707 A1